# EUROPÄISCHE PATENTANMELDUNG

(11) **EP 0 854 584 A2**
(43) Veröffentlichungstag der Anmeldung: **22.07.1998**
(21) Anmeldenummer: 98250005.0
(22) Anmeldetag: 08.01.1998
(51) Int. Cl.: H04B 1/38

(54) **Zusatzgerät für ein portables Funktelefon**

(30) Priorität: 20.01.1997 DE 19702895
(71) Anmelder: MANNESMANN Aktiengesellschaft, 40213 Düsseldorf (DE)
(72) Erfinder: Köhler, Uwe, Dipl.-Ing., 40789 Monheim (DE); Schröter, Andreas, Dipl.-Ing., 40670 Meerbusch (DE); Aengenendt, Paul, Dipl.-Ing., 40477 Düsseldorf (DE); Nagel, Jens, Dipl.-Psych., 40477 Düsseldorf (DE)
(74) Vertreter: Presting, Hans-Joachim, Dipl.-Ing.

(57) **Zusammenfassung**

Die Erfindung betrifft ein Zusatzgerät für ein Mobilfunktelefon (1) (Handy) in einem mit einem Gesprächskanal und einem separaten Datenkanal betriebenen Mobilfunknetz, wobei das Zusatzgerät zum Abruf von Informationen aus einer Informationszentrale (8) (Informationsdienstleistung), die mit dem Benutzer des Mobilfunktelefons (1) per Sprachausgabe kommuniziert, vorgesehen ist und eine Handy-Halterung (2) für den Anschluß des Mobilfunktelefons (1) beinhaltet.

Erfindungsgemäß wird vorgeschlagen, daß eine Elektronikeinheit (3) vorgesehen ist, die einen Empfänger (4) für drahtlos übermittelte Informationen zur Bestimmung der geografischen Ortsposition des Zusatzgerätes aufweist,
daß eine Tasteneingabeeinheit (11) mit mindestens einer Anwahltaste (V) für die direkte Anwahl der vom Benutzer gewünschten Informationsdienstleistung durch einen einfachen Tastendruck vorgesehen ist,
daß die Elektronikeinheit (3) eine Steuereinrichtung (5) aufweist, die derart programmiert ist,
daß die Steuereinrichtung (5) bei Betätigung der Anwahltaste (V) der jeweiligen Informationsdienstleistung eine vollständige Anfrage an die Informationszentrale (8) als Datenmitteilung zusammenstellt, die mindestens eine Information enthält, die für die aktuelle Ortsposition des Zusatzgerätes repräsentativ ist, und diese Datenmitteilung selbsttätig mittels des Mobilfunktelefons (1) über den separaten Datenkanal des Mobilfunknetzes an die Informationszentrale (8) versendet, ....

## Beschreibung

Die Erfindung betrifft ein Zusatzgerät für ein Mobilfunktelefon (Handy), das in einem Mobilfunknetz eingesetzt wird, in dem neben dem Gesprächskanal auch ein separater Datenkanal betrieben wird. Mit Hilfe des Zusatzgerätes sind im Rahmen einer Informationsdienstleistung Informationen aus einer Informationszentrale abrufbar, wobei die Informationszentrale mit dem Benutzer des Mobilfunktelefons per Sprachausgabe kommuniziert. Das Zusatzgerät beinhaltet eine Handy-Halterung für den Anschluß des Mobilfunktelefons.

Aus der Zeitschrift "Funkschau" 5/1994, Seiten 8 bis 21, insbes. Seite 10 links, letzter Absatz, ist für ein Mobilfunktelefon, das in einem Fahrzeug mitgeführt wird, eine Handy-Halterung bekannt, die fest im Fahrzeug installiert ist und in die das Mobilfunktelefon durch einen einfachen Handgriff eingesteckt und bei Bedarf wieder herausgenommen werden kann. Diese Handy-Halterung stellt eine Stromversorgung für das Mobilfunktelefon sicher, so daß die Batterie des Mobilfunktelefons aufgeladen werden kann, und ist darüber hinaus auch mit einer Freisprecheinrichtung verbunden. Das bedeutet, daß neben einem Mikrofon auch ein separater Lautsprecher installiert ist, so daß es dem Fahrer des Fahrzeugs möglich ist, ein Telefongespräch zu führen, ohne das Mobilfunktelefongerät in den Händen halten zu müssen.

Mit der Einführung von Mobilfunknetzen haben sich auch neue Dienstleistungen etabliert, die sich auf die Vermittlung von Informationen an interessierte Benutzerkreise beziehen. Ein Beispiel hierfür stellen Verkehrstelematik-Dienstleistungen dar, die sich insbesondere auf die Zurverfügungstellung aktueller Verkehrsinformationen an Verkehrsteilnehmer beziehen. Es sind aber auch andere Dienstleistungen bekannt, wie etwa die Lieferung von Informationen über Hotels in einer bestimmten Region. Solche Informationen lassen sich ohne weiteres mittels Sprachausgabe an den Benutzer weitergeben. In diesem Zusammenhang ist es bekannt, daß der Benutzer über die Tastatur seines Mobilfunktelefons schrittweise oder auch in einem umfassenderen Abfragebefehl die von ihm gewünschten Informationen aus dem Rechner der Informationszentrale gezielt abruft. Für die Eingabe dieser Abfragebefehle ist selbstverständlich ein erhöhter Aufmerksamkeitsgrad erforderlich. Während einer Fahrt in einem Fahrzeug muß sich der Fahrer jedoch auf den Verkehr konzentrieren, so daß eine zu starke Ablenkung für die Formulierung einer Informationsabfrage gefährlich sein könnte.

Aufgabe der vorliegenden Erfindung ist es, ein Zusatzgerät der eingangs beschriebenen Art dahingehend weiterzubilden, daß die Abfrage von Informationen, insbesondere die Abfrage von Verkehrsinformationen, erheblich vereinfacht wird, wobei der vorrichtungsmäßige Aufwand möglichst klein bleiben soll.

Gelöst wird diese Aufgabe bei einem gattungsgemäßen Zusatzgerät durch folgende Merkmale: Das Zusatzgerät wird um eine Elektronikeinheit erweitert, die einen Empfänger für drahtlos übermittelte Informationen zur Bestimmung der geografischen Ortsposition des Zusatzgerätes aufweist. Vorzugsweise ist dieser Empfänger als Empfänger für ein System zur Satellitennavigation, insbesondere als GPS-Empfänger (Global Positioning System) ausgebildet. Weiterhin umfaßt die Elektronikeinheit eine programmierte Steuereinrichtung, die mit Hilfe der vom Empfänger erhaltenen Informationen jederzeit über die aktuelle geografische Ortsposition des Zusatzgerätes verfügt. Da das Zusatzgerät z.B. in einem Fahrzeug eingebaut ist, ist damit die aktuelle Ortsposition des Fahrzeugs als Information in der Elektronikeinheit verfügbar. Die Elektronikeinheit weist ferner eine Tasteneingabeeinheit auf, die mindestens eine Anwahltaste umfaßt, um durch einen einfachen Tastendruck eine direkte Anwahl einer vom Benutzer gewünschten Informationsdienstleistung auszuführen. Beispielsweise soll durch den Tastendruck die Ausgabe aktueller Verkehrsinformationen für den Bereich, den das Fahrzeug gerade befährt, ermöglicht werden. Hierzu ist die Programmierung der Elektronikeinheit erfindungsgemäß wie folgt ausgerichtet. Bei Betätigung der jeweiligen Anwahltaste für die gewünschte Informationsdienstleistung wird von der Steuereinrichtung der Elektronikeinheit eine vollständige Anfrage an die Informationszentrale in Form einer Datenmitteilung zusammengestellt, die mindestens eine Information enthält, die für die aktuelle Ortsposition des Zusatzgerätes repräsentativ ist. Die Datenmitteilung kann also beispielsweise unmittelbar die geografische Ortsposition enthalten oder aber auch Daten, aus denen sich diese Ortsposition mit hinreichender Genauigkeit ermitteln läßt. Sie wird von der Steuereinrichtung selbsttätig mittels eines Mobilfunktelefons über den separaten Datenkanal des Mobilfunknetzes an die Informationszentrale versandt. Damit kann der Rechner der Informationszentrale aus seiner Datenbank die vom Benutzer gewünschten Informationen ermitteln. Erfindungsgemäß ist vorgesehen, daß vor der eigentlichen Übermittlung der angefragten Informationen von der Informationszentrale über den separaten Datenkanal des Mobilfunknetzes eine Antwort wiederum in Form einer Datenmitteilung gesendet wird. Diese Datenmitteilung enthält eine Kennung, die von der Steuereinrichtung auswertbar ist und entweder angibt, daß keine relevanten Informationen für den Benutzer vorliegen, oder aber anzeigt, unter welcher Abrufadresse die angefragten Informationen für den Benutzer akustisch abfragbar sind. Im Falle des Nichtvorliegens relevanter Informationen wird vom Zusatzgerät lediglich eine entsprechende Mitteilung an den Benutzer ausgegeben. Dies kann durch eine optische Anzeige oder auch durch ein akustisches Signal erfolgen. Eine Gesprächsverbindung zum Rechner der Informationszentrale wird in einem solchen Negativfall nicht aufgebaut. Anders ist dies, wenn tatsächlich relevante Informationen vorliegen. In einem solchen Fall stellt die Steuereinrichtung des Zusatzgerätes selbsttätig eine Sprachverbindung über das Mobilfunktelefon zur Informationszentrale unter Übermittlung der Abrufadresse her. Für die Übermittlung der Abrufadresse können gängige Verfahren benutzt werden. Hierzu bietet sich beispielsweise eine Codierung als Erweiterung der Telefonnummer, ähnlich wie eine Nebenstelle, an, d.h. das Zusatzgerät erhält die Abrufadresse als Durchwahlnummer einer bestimmten Nebenstelle, unter der die individuellen Informationen abgerufen werden können. Alternativ dazu kann auch das bekannte DTMF-Verfahren (dual tone mutiple frequency) angewandt werden, um der Zentrale bei Anruf nach Aufbau der Sprachverbindung akustisch die gewünschte Abrufadresse mitzuteilen.

Die Erfindung wird nachfolgend am Beispiel eines Zusatzgerätes für verkehrstelematische Informationsdienstleistungen mit vorteilhaften Weiterbildungen näher erläutert. Es zeigen:
- Fig. 1: Funktionsschema eines Verkehrsinformationsdienstes unter Nutzung des erfindungsgemäßen Zusatzgerätes,
- Fig. 2 bis 4: unterschiedliche Ausführungen der Tasteneingabeeinheit des Zusatzgerätes.

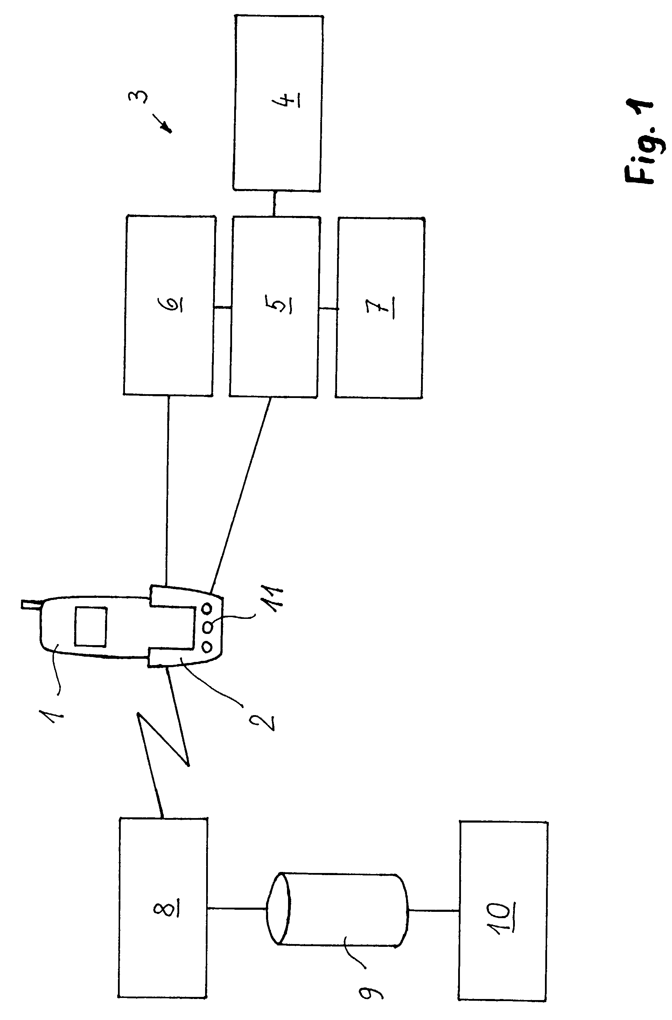

In der Fig. 1 ist das Schema eines Verkehrsinformationsdienstes wiedergegeben. Mit dem Bezugszeichen 8 ist eine Informationszentrale bezeichnet, die über eine Datenbank 9 verfügt, in der aktuelle Verkehrsinformationen über ein Verkehrsnetz gespeichert sind. Diese Informationen werden von einem Verkehrslageerfassungssystem 10 ermittelt und in die Datenbank 9 eingespeist. In einem nicht näher dargestellten Fahrzeug ist eine Handy-Halterung 2 installiert, die in ihrem unteren Teil eine Tasteneingabeeinheit 11 aufweist. Diese Tasteneingabeeinheit 11 ist Teil einer Elektronikeinheit eines Zusatzgerätes, das mit einem Mobilfunktelefon 1 informationstechnisch verbindbar ist und in dem Fahrzeug installiert ist. Die Elektronikeinheit ist mit dem Bezugszeichen 3 versehen. Sie beinhaltet außer der Tasteneingabeeinheit 11 insbesondere eine programmierbare Steuereinrichtung 5 mit einem Speicher 7. Ferner umfaßt die Elektronikeinheit 3 auch einen Empfänger 4 zum Empfang von Signalen eines Navigationssatellitensystems, so daß die Steuereinrichtung 5 stets über Informationen über den aktuellen Aufenthaltsort des Zusatzgerätes und damit des dieses Gerät bewegenden Fahrzeugs verfügt. Zweckmäßigerweise bilden die Handy-Halterung 2 und die Tasteneingabeeinheit 11 eine körperliche Baueinheit. Die Steuereinrichtung 5 mit dem Speicher 7 und der GPS-Empfänger 4 werden zweckmäßig körperlich getrennt von der Handy-Halterung 2 angeordnet. Die nachfolgend näher zu erläuternde Ausgabe von abgefragten Verkehrsinformationen wird wesentlich erleichtert, wenn eine Freisprecheinrichtung vorgesehen ist, die in Fig. 1 mit dem Bezugszeichen 6 bezeichnet ist.

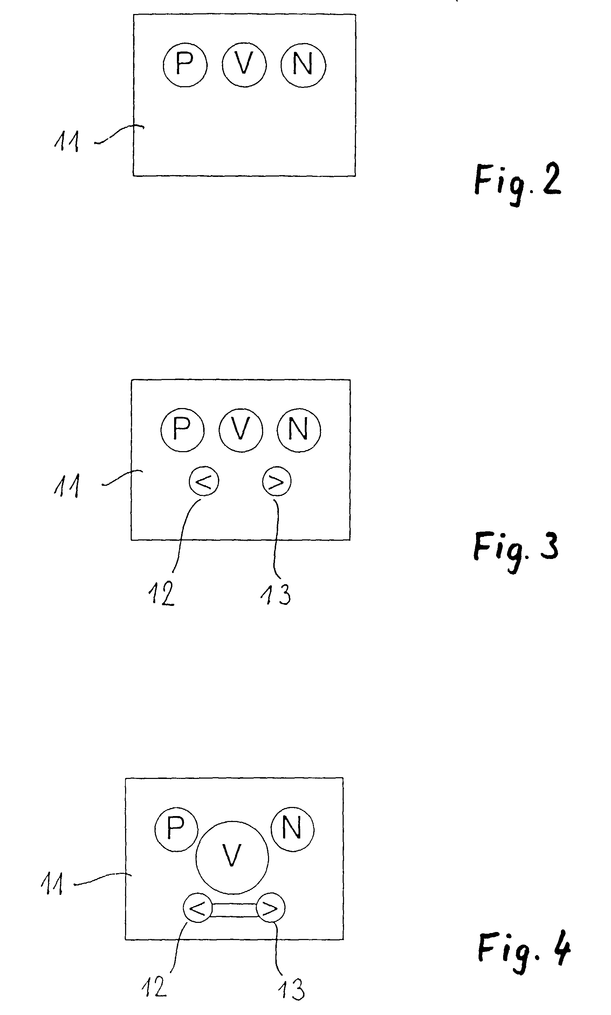

Das Tastenfeld 11 kann beispielsweise in einer einfachen Form so aussehen, wie dies in Fig. 2 vergrößert dargestellt ist. Es sind insgesamt lediglich 3 Tasten vorgesehen, von denen die mit ,,V" bezeichnete mittlere Taste zum Abruf von Verkehrsinformationen vorgesehen ist. Wenn diese Taste V betätigt wird, wird durch die Steuereinrichtung 5 eine Datenmitteilung an die Verkehrsinformationszentrale 8 zusammengestellt, die die aktuelle Ortsposition des Fahrzeugs oder eine dafür repräsentative Information beinhaltet. Vorzugsweise wird auch eine Information über die allgemeine Fahrtrichtung des Fahrzeugs mitübertragen. Diese Information kann beispielsweise dadurch ermittelt werden, daß im Speicher 7 Daten über die Fahrthistorie des Fahrzeugs (z.B. während der letzten halben Stunde) gespeichert und von der Steuereinrichtung 5 entsprechend abgerufen werden. Auf diese Weise kann der Verkehrsinformationszentrale 8 mitgeteilt werden, welches Gebiet des Straßenverkehrsnetzes von dem Fahrzeug voraussichtlich in Kürze befahren werden soll. Ändert das Fahrzeug häufig seine Fahrtrichtung, können beispielsweise Informationen in einem Umkreis um den aktuellen Aufenthaltsort selektiert werden. Behält dagegen das Fahrzeug seine allgemeine Fahrtrichtung im wesentlichen bei, wie dies beim Befahren einer bestimmten Autobahn der Fall ist, können alle Verkehrshinweise ausgelassen werden, die in Streckenabschnitten angefallen sind, die bezogen auf die Fahrtrichtung bereits hinter dem Fahrzeug liegen. Nachdem die Verkehrsinformationszentrale 8 entsprechend der über den separaten Datenkanal des Mobilfunknetzes übermittelten Anfrage des Benutzers die tatsächlich relevanten Verkehrsinformationen selektiert hat, wird von der Verkehrsinformationszentrale 8 über den separaten Datenkanal eine Datenmitteilung an das Mobilfunktelefon 1 übermittelt, die eine Kennung enthält, aus der sich ergibt, ob überhaupt relevante Verkehrsinformationen vorliegen und wenn ja, unter welcher Abrufadresse diese Verkehrsinformationen vom Benutzer akustisch abfragbar sind. Wenn die Steuereinrichtung 5 erkennt, daß relevante Verkehrsinformationen vorliegen, wird selbsttätig eine Sprachverbindung zum Rechner der Verkehrsinformationszentrale 8 aufgebaut und die Abrufadresse für die vorliegenden Verkehrsinformationen mitgeteilt. Diese Informationen werden dann über den Sprachkanal und die an das Mobilfunktelefon 1 angeschlossene Freisprecheinrichtung 6 im Fahrzeug an den Fahrer ausgegeben.

Die vorliegende Erfindung ermöglicht es daher, unter Nutzung des relativ wenig Aufwand erfordernden Zusatzgerätes den Abruf von interessierenden Verkehrsinformationen in einer ganz gezielten Weise lediglich durch einen einfachen Tastendruck abzufragen. Für den Fall, daß keine relevanten Verkehrsinformationen vorliegen, erfolgt lediglich ein entsprechender kurzer Hinweis an den Fahrer. Eine Gesprächsverbindung zur Verkehrsinformationszentrale wird nur dann aufgebaut, wenn wirklich interessierende Informationen vorliegen.

Neben der Taste für den Abruf von Verkehrsinformationen sind in Fig. 2 zwei weitere Tasten dargestellt, die mit,,P" bzw. "N" bezeichnet sind. Mit der P-Taste kann z.B. auf sehr einfache Art und Weise ein Pannenhilferuf ausgelöst werden. In diesem Fall wird von der Steuereinrichtung 5 lediglich an eine entsprechende Servicezentrale eine Mitteilung geschickt, an welchem Ort sich das jeweilige Fahrzeug gerade aufhält und daß es Hilfe für die Beseitigung einer Fahrzeugpanne benötigt. In einem solchen Fall würde die jeweilige Servicezentrale eine Gesprächsverbindung mit dem Mobilfunktelefon 1 herstellen, um dem Fahrer nähere Informationen zu übermitteln, welcher Hilfsdienst wann für die angeforderte Hilfe zur Verfügung stehen wird. In ähnlicher Weise können bei Betätigung der N-Taste Informationen zwischen einer Notrufzentrale und dem Fahrer des Fahrzeugs ausgetauscht werden. Durch die beiden Tasten P und N wird der Gebrauchswert des erfindungsgemäßen Zusatzgerätes wesentlich erhöht. Selbstverständlich können auch weitere Tasten vorgesehen sein, mit denen unmittelbar Kontakt zu einer Informationszentrale aufgenommen werden kann. Ein Beispiel hierfür wäre etwa ein Informationsdienst für Hotels, der entsprechend dem Aufenthaltsort des Fahrzeugs zielgerichtet solche Hotelinformationen selektieren kann, die sich auf einen relativ eng begrenzten regionalen Bereich um diesen Aufenthaltsort des Fahrzeugs beziehen. Es empfiehlt sich die mit der Betätigung der P- und N-Tasten verbundenen Funktionen erst mit Verzögerung auszuführen, damit bei einem unbeabsichtigten Tastendruck die Befehlsausführung (z.B. durch Drücken einer nicht dargestellten Löschtaste) noch vom Bediener des Zusatzgerätes gestoppt werden kann.

Im Zusammenhang mit der gezielten Abfrage von Informationen bei einer Informationszentrale ist es von großem Vorteil, wenn die Tasteneingabeeinheit 11 über zusätzliche Tasten verfügt, wie sie mit den Bezugszeichen 12 und 13 in Fig. 1 im unteren Teil des Tastenfeldes 11 dargestellt sind. Diese zusätzlichen Tasten 12, 13 haben die Funktion, die von der Informationszentrale 8 an das Mobilfunktelefon 1 sprachlich übermittelten Informationen im Sinne eines Vor- und Zurückspulens gezielt durch den Benutzer abfragen zu können. Bei Betätigung einer dieser zusätzlichen Tasten 12, 13 ist in Weiterbildung der Erfindung vorgesehen, daß vom Mobilfunktelefon 1 akustische Signale (DTMF-Signale) über den Sprachkanal des Mobilfunknetzes an die Informationszentrale 8 übermittelt werden. Diese Signale werden vom Rechner der Informationszentrale 8 jeweils so interpretiert, daß im Falle des Vorliegens mehrerer relevanter Verkehrsinformationen zwischen einzelnen Informationen gezielt hin- und hergesprungen werden kann. Damit können also beispielsweise bereits sprachlich ausgegebene Informationen gezielt wiederholt werden oder aber auch den Fahrer nicht interessierende Informationen gezielt übersprungen werden.

In Fig. 4 ist eine Abwandlung des Tastenfeldes 11 dargestellt, das in seiner Funktion völlig dem Tastenfeld 11 der Fig. 3 entspricht. Hier wurden die Tasten P, V und N nicht in einer geraden Reihe nebeneinander angeordnet, sondern es wurde eine räumliche Anordnung in Form eines Dreiecks gewählt. Außerdem wurde die Taste für den Abruf von Verkehrsinformationen deutlich größer gemacht als die beiden für eine seltenere Benutzung vorgesehenen Tasten P und N. Durch eine andere äußere Gestaltung, insbesondere eine unterschiedliche Größe, lassen sich die einzelnen Tasten sehr viel leichter voneinander unterscheiden. Um eine Verwechslung der Tasten nach Möglichkeit zu vermeiden, können weitere zusätzliche Maßnahmen getroffen werden. So empfiehlt es sich etwa, die Tasten der Tasteneingabeeinrichtung 11 von innen zu beleuchten. Weiterhin sollten die einzelnen Tasten durch aufgedruckte oder aufgeprägte Buchstaben oder Piktogramme in ihrer Funktion leicht erkennbar sein. Selbstverständlich ist es auch möglich, diese Kennzeichnungen außerhalb der Tasten in deren unmittelbarer Nähe auf dem Tableau des Tastenfeldes 11 selbst vorzunehmen. Im Hinblick auf die erwähnten Tasten 12, 13 für das Vor- und Zurückspulen von auszugebenden Informationen hat es sich als zweckmäßig erwiesen, diese beiden Tasten 12, 13 durch eine Brücke im Sinne eines Wippschalters miteinander zu verbinden.

Im Hinblick auf die Übermittlung einer Informationsabfrage vom Mobilfunktelefon 1 an eine Informationszentrale 8 kann im Grundsatz jeder beliebige Datenkanal des Mobilfunknetzes benutzt werden. Es empfiehlt sich hierfür aber insbesondere der ohnehin für die Versendung von Kurzmitteilungen vorgesehene SMS-Kanal.

Im Zusammenhang mit der Abfrage von Verkehrsinformationen ist noch auf eine besonders vorteilhafte Ausführungsform der Erfindung hinzuweisen. Diese bezieht sich insbesondere auch auf solche Einsatzfälle, bei denen das erfindungsgemäße Zusatzgerät in einem Fahrzeug eingebaut ist, das bereits über ein Zielführungssystem, also eine Navigationshilfe verfügt. In solchen Fällen liegen im Fahrzeug regelmäßig Informationen darüber vor, auf welcher Straße sich das Fahrzeug aktuell befindet, da die tatsächlich eingeschlagene Fahrtroute von diesem Zielführungssystem stets überwacht werden muß, um sie mit der geplanten Fahrtroute vergleichen zu können.

Das bedeutet, daß vielfach der Typ der gerade befahrenen Straße oder sogar deren Bezeichnung (z.B. Autobahn A3) bekannt ist und nach Übergabe über eine entsprechende Schnittstelle des Zusatzgerätes in die Datenmitteilung bei der Abfrage der Verkehrsinformationen an die Verkehrsinformationszentrale einbezogen werden kann. Dies hat beispielsweise dann erhebliche Vorteile, wenn etwa neben einer Autobahn eine parallele Bundesstraße verläuft und auf einer dieser beiden Straßenzüge ein Stau vorliegt. In diesem Fall kann die Verkehrsinformationszentrale von sich aus eine sichere Entscheidung treffen, ob diese Stauinformation für den anfragenden Verkehrsteilnehmer relevant und daher zu übermitteln ist oder nicht. Unter Umständen läßt sich auch bereits anhand der Fahrthistorie, die wie bereits erwähnt, im Speicher 7 für einen gewissen Zeitraum aufgezeichnet werden kann, eine hinreichende Information an die Informationszentrale 8 liefern, auf welcher Straße sich das Fahrzeug bewegt. Es lassen sich auch anhand von Erkennungsalgorithmen, die im wesentlichen Bewegungsgrößen eines Fahrzeugs (insbesondere Geschwindigkeiten, Beschleunigungen) analysieren, aber nicht Gegenstand der vorliegenden Erfindung sind, wertvolle Hinweise über den befahrenen Straßentyp zur Selektion relevanter Verkehrsinformationen gewinnen, ohne daß ein Zielführungssystem vorhanden sein muß.

## Patentansprüche

1. Zusatzgerät für ein Mobilfunktelefon (1) (Handy) in einem mit einem Gesprächskanal und einem separaten Datenkanal betriebenen Mobilfunknetz, wobei das Zusatzgerät zum Abruf von Informationen aus einer Informationszentrale (8) (Informationsdienstleistung), die mit dem Benutzer des Mobilfunktelefons (1) per Sprachausgabe kommuniziert, vorgesehen ist und eine Handy-Halterung (2) für den Anschluß des Mobilfunktelefons (1) beinhaltet, dadurch gekennzeichnet,
- daß eine Elektronikeinheit (3) vorgesehen ist, die einen Empfänger (4) für drahtlos übermittelte Informationen zur Bestimmung der geografischen Ortsposition des Zusatzgerätes aufweist,
- daß eine Tasteneingabeeinheit (11) mit mindestens einer Anwahltaste (V) für die direkte Anwahl der vom Benutzer gewünschten Informationsdienstleistung durch einen einfachen Tastendruck vorgesehen ist,
- daß die Elektronikeinheit (3) eine Steuereinrichtung (5) aufweist, die derart programmiert ist,
- daß die Steuereinrichtung (5) bei Betätigung der Anwahltaste (V) der jeweiligen Informationsdienstleistung eine vollständige Anfrage an die Informationszentrale (8) als Datenmitteilung zusammenstellt, die mindestens eine Information enthält, die für die aktuelle Ortsposition des Zusatzgerätes repräsentativ ist, und diese Datenmitteilung selbsttätig mittels des Mobilfunktelefons (1) über den separaten Datenkanal des Mobilfunknetzes an die Informationszentrale (8) versendet,
- daß die Steuereinrichtung (5) aus einer als Antwort von der Informationszentrale (8) über den separaten Datenkanal an das Mobilfunktelefon (1) übermittelten Datenmitteilung eine Kennung ermittelt, die entweder angibt, daß keine relevanten Informationen vorliegen, oder angibt, unter welcher Abrufadresse die angefragten Informationen für den Benutzer akustisch abfragbar sind,
- und daß im Falle des Nichtvorliegens relevanter Informationen eine entsprechende Mitteilung an den Benutzer ausgegeben wird und im Falle des Vorliegens relevanter Informationen die selbsttätige Herstellung einer Sprachverbindung über das Mobilfunktelefon (1) zur Informationszentrale (8) unter Übermittlung der Abrufadresse erfolgt.

2. Zusatzgerät nach Anspruch 1,
dadurch gekennzeichnet,
daß die Abrufadresse nach Aufbau der Sprachverbindung akustisch in Form von DTMF-Signalen (dual tone mutiple frequency) an die Informationszentrale (8) übermittelbar ist.

3. Zusatzgerät nach einem der Ansprüche 1 bis 2,
dadurch gekennzeichnet,
daß die Handy-Halterung (2) und die Tasteneingabeeinheit (11) eine körperliche Baueinheit bilden.

4. Zusatzgerät nach einem der Ansprüche 1 bis 3,
dadurch gekennzeichnet,
daß die Elektronikeinheit (3) körperlich getrennt von der Handy-Halterung (2) angeordnet ist.

5. Zusatzgerät nach Anspruch 1 bis 4,
dadurch gekennzeichnet,
daß die Handy-Halterung (2) mit einer Freisprecheinrichtung (6) verbunden ist.

6. Zusatzgerät nach einem der Ansprüche 1 bis 5,
dadurch gekennzeichnet,
daß die Tasteneingabeeinheit (11) mindestens eine Taste (V) für den Abruf von aktuellen Verkehrsinformationen sowie eine Taste (P) für einen Pannenhilferuf und eine Taste (N) für einen Notruf aufweist.

7. Zusatzgerät nach einem der Ansprüche 1 bis 6,
dadurch gekennzeichnet,
daß die Tasteneingabeeinheit (11) zwei zusätzliche Tasten (12, 13) aufweist, mit denen vom Mobilfunktelefon (1) akustische Signale (DTMF-Signale) über den Sprachkanal des Mobilfunknetzes an die Informationszentrale (8) übermittelbar sind und die akustische Ausgabe der angefragten Informationen im Sinne eines Vor- und Zurückspulens vom Benutzer durch diese Signale gezielt beeinflußbar ist.

8. Zusatzgerät nach einem der Ansprüche 1 bis 7,
dadurch gekennzeichnet,
daß die Tasten der Tasteneingabeeinrichtung (11) in ihrer äußeren Gestaltung, insbesondere hinsichtlich ihrer Größe, unterschiedlich sind.

9. Zusatzgerät nach einem der Ansprüche 7 bis 8,
dadurch gekennzeichnet,
daß die beiden Tasten (12, 13) für das Vor- und Zurückspulen der Informationsausgabe durch eine Brücke im Sinne eines Wippschalters miteinander verbunden sind.

10. Zusatzgerät nach einem der Ansprüche 1 bis 9,
dadurch gekennzeichnet,
daß die Tasten der Tasteneingabeeinrichtung (11) von innen beleuchtbar sind.

11. Zusatzgerät nach einem der Ansprüche 1 bis 10,
dadurch gekennzeichnet,
daß die Tasten der Tasteneingabeeinrichtung (11) durch aufgedruckte oder aufgeprägte Buchstaben oder Piktogramme in ihrer Funktion erkennbar sind.

12. Zusatzgerät nach einem der Ansprüche 1 bis 11,
dadurch gekennzeichnet,
daß einzelne Tasten der Tasteneingabeeinrichtung (11) an ihrer Oberfläche leicht ertastbare individuelle Strukturen aufweisen.

13. Zusatzgerät nach einem der Ansprüche 1 bis 12,
dadurch gekennzeichnet,
daß der Empfänger (4) als Empfänger eines Satellitennavigationssystems (GPS-Empfänger) ausgebildet ist.

14. Zusatzgerät nach einem der Ansprüche 1 bis 13,
dadurch gekennzeichnet,
daß das Zusatzgerät auf die Benutzung des SMS-Kanals für die Versendung von Kurzmitteilungen (Short Message Service) im Mobilfunknetz eingerichtet ist.

15. Zusatzgerät nach einem der Ansprüche 1 bis 14,
dadurch gekennzeichnet,
daß die Programmierung der Steuereinrichtung (5) vorsieht, daß die aktuelle Bewegungsrichtung des Zusatzgeräts, die aus den vom Empfänger (4) empfangenen Informationen abgeleitet und in der Datenmitteilung an die Informationszentrale (8) mit übertragen wird.

16. Zusatzgerät nach einem der Ansprüche 1 bis 15,
dadurch gekennzeichnet,
daß die Programmierung der Steuereinrichtung (5) darauf eingerichtet ist, den Typ oder den Namen der Straße, auf dem das in einem Fahrzeug eingebaute Zusatzgerät bewegt wird, anhand der über den Empfänger (4) empfangenen Informationen über die aktuelle Ortsposition zu ermitteln oder über eine Schnittstelle aus einem im Fahrzeug mitgeführten Zielführungssystem zu entnehmen und in der Datenmitteilung an die Informationszentrale (8) zu übermitteln.
